# EUROPEAN PATENT APPLICATION

(11) **EP 3 147 828 A1**
(43) Date of publication of application: **29.03.2017**
(21) Application number: 14892520.9
(22) Date of filing: 17.10.2014
(51) Int. Cl.: G06K 17/00, G06K 19/07

(54) **PASSIVE RADIO FREQUENCY IDENTIFICATION TAG, OPTICAL RADIO FREQUENCY READ/WRITE HEAD AND RADIO FREQUENCY IDENTIFICATION SYSTEM**

(30) Priority: 23.05.2014 CN 201410223633
(71) Applicant: ZTE Corporation, Shenzhen, Guangdong 518057 (CN)
(72) Inventor: XU, Jidong, Shenzhen Guangdong 518057 (CN); LU, Jianxin, Shenzhen Guangdong 518057 (CN)
(74) Representative: Savi, Massimiliano
(86) International application number: PCT/CN2014/088870
(87) International publication number: WO 2015/176479

(57) **Abstract**

Disclosed are a passive radio frequency identification tag, optical radio frequency read/write head and radio frequency identification system. Herein, the optical radio frequency read/write head includes: at least one optical emitter, a chip, and a radio frequency antenna. Herein, the ratio frequency antenna connected to the chip is configured to receive an uplink radio frequency signal sent by a radio frequency identification tag; the chip is configured to control the at least one optical emitter to send a downlink optical signal to the radio frequency identification tag and process the uplink radio frequency signal to perform a read/write operation on the radio frequency identification tag; the at least one optical emitter connected to the chip is configured to send the downlink optical signal. The present invention sends a read/write operation command through an optical signal to a radio frequency identification signal under a radio frequency identification tag to avoid the problem of interferences caused because a read/write operation command is received by a plurality of radio frequency identification tags when the read/write operation command is sent via a radio frequency signal.

## Description

### Technical Field

The present invention relates to the field of communication, and more particularly, to a passive radio frequency identification tag, optical radio frequency read/write head and radio frequency identification system.

### Background

With a mature development of optical fiber communication technology and a constant promotion of demands of the modern information society on networks, the optical fiber network has replaced the copper wire communication network, and its network, from the core network, the bearer network to the access network and the fiber to the home, FTTH, covers almost all of communication networks. There are a lot of optical fibers and connection points in the entire optical network. How to identify these optical fibers and their connection conditions is time consuming and laborious for operators. In order to improve the work efficiency and reduce the work intensity, a intelligent tag is added to each optical connection point, then the read/write head automatically reads the intelligent tag and reports relevant data to the network management, thus the automation of the optical fiber connection point detection gradually become a consensus to achieve a visual and manageable optic fiber network.

The intelligent optical distribution network is to add a tag and a read/write head to each optical connection head to make it automatically report its connection status, i.e., intelligentization. The intelligent Optical Distribution Network, ODN has been standardized by the China Communications Standards Association, CCSA, and a corresponding industrial chain has begun to take shape.

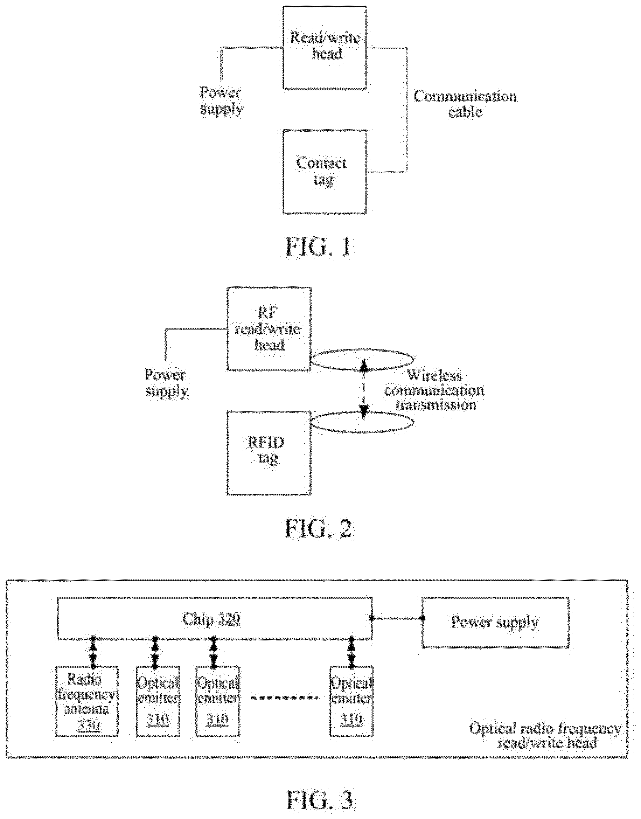

At present, the intelligent ODN mainly uses two kinds of tag technologies: one is the contact tag technology, a typical example is the 1-Wire interface, or the electrically erasable programmable read-only memory, EEPROM interface, as shown in FIG. 1, and the tag needs to be powered. The contact tag technology has a higher requirement on the design and reliability of the tag structure, while is not flexible enough in some renovation scenarios because of its physical connections. The other one is the contactless tag technology, and a relatively typical example is the radio frequency identification, RFID, technology, as shown in FIG. 2. Due to its own working principle, that is, cutting magnetic field lines to induce current, its coil needs a certain of working area in order to produce sufficient induced current to drive its chip to work normally. Secondly, the working coil of the read/write head should also have a certain working area, and its adjacent RFID will be induced, and mutual interference will be caused. Therefore, the technology is not suitable for working environments of optical nodes having dense fiber optic connection heads.

In view of that, there is a need for a tag that maintains the contactless read/write while meets the read/write techniques of other tags required by optical nodes having dense optical fiber connection head heads.

### Summary of the Invention

The present invention provides a passive radio frequency identification tag, an optical radio frequency read/write head and a radio frequency identification system to solve at least the problem that contact tag technologies and RFID tags cannot meet dense scenarios in the related art.

According to an embodiment of the present invention, an optical radio frequency read/write head is provided, comprising: at least one optical emitter, a chip, and a radio frequency antenna, herein the radio frequency antenna connected to the chip is configured to receive an uplink radio frequency signal sent by a radio frequency identification tag, the chip is configured to control the at least one optical emitter to send a downlink optical signal to the radio frequency identification tag and process the uplink radio frequency signal, in order to perform a read/write operation on the radio frequency identification tag; the at least one optical emitter connected to the chip is configured to send the downlink optical signal.

There are a plurality of the optical emitters, the chip is further configured to, when performing a read/write operation on a designated radio frequency identification tag in a plurality of the radio frequency identification tags, control an optical emitter corresponding to the designated radio frequency identification tag in the plurality of optical emitters to illuminate to turn on the designated radio frequency identification tag; and control the corresponding optical emitter to send the downlink optical signal; the plurality of optical emitters are further configured to illuminate under the control of the chip.

The optical radio frequency reader/writer head includes one RF antenna.

Each of the optical emitters is a light emitting diode, LED or a laser diode, LD.

According to another embodiment of the present invention, a passive radio frequency identification tag is provided, comprising: a photovoltaic voltage detector, a radio frequency antenna, and a chip, herein the photovoltaic voltage detector connected to the chip and the radio frequency antenna is configured to convert optical energy emitted by an optical RF read/write head to electrical energy to supply power to the chip and the radio frequency antenna; receive a downlink optical signal sent by the optical radio frequency read/write head, and convert the downlink optical signal to an electrical signal, and send the electrical signal to the chip; the chip is configured to store tag information, process the electrical signal, respond to a read and write operation of the optical radio frequency read/write head, and send an uplink radio frequency signal to the optical radio frequency read/write head; the radio frequency antenna connected to the chip is configured to send the uplink RF signal.

According to still another embodiment of the present invention, a radio frequency tag identification system is provided, comprising: a passive radio frequency identification tag and an optical radio frequency read/write head, herein,
the passive radio frequency identification tag includes a photovoltaic voltage detector, a first radio frequency antenna and a first chip, herein the photovoltaic voltage detector connected with the first chip and the first radio frequency antenna is configured to convert optical energy sent by the optical radio frequency read/write head to electrical energy to supply power to the first chip and the first radio frequency antenna, and receive a downlink optical signal sent by the optical radio frequency read/write head, convert the downlink optical signal into an electrical signal, and send the electrical signal to the first chip; the first chip is configured to store tag information, process the electrical signal, respond to a read/write operation of the optical radio frequency read/write head, and send an uplink radio frequency signal to the optical radio frequency read/write head; the first radio frequency antenna connected to the first chip is configured to send the uplink radio frequency signal;
the optical radio frequency read/write head includes: at least one optical emitter, a second chip and a second radio frequency antenna, herein the second radio frequency antenna connected with the second chip is configured to receive the uplink radio frequency signal; the second chip is configured to control the at least one optical emitter to send the downlink optical signal to the radio frequency identification tag, as well as process the uplink radio frequency signal, in order to perform a read/write operation on the radio frequency identification tag; the at least one optical emitter connected to the second chip is configured to send the downlink optical signal under the control of the second chip.

There are a plurality of the optical emitters, the second chip is further configured to, when performing a read/write operation on a designated radio frequency identification tag in a plurality of the radio frequency identification tags, control an optical emitter corresponding to the designated radio frequency identification tag in the plurality of optical emitters to illuminate to turn on the designated radio frequency identification tag; as well as control the corresponding optical emitter to send the downlink optical signal; the plurality of optical emitters are further configured to illuminate under the control of the chip.

The optical radio frequency reader/writer head includes one second RF antenna.

The optical emitter is a light emitting diode LED or a laser diode LD.

According to still another embodiment of the present invention, an optical fiber connection head is provided, at which the abovementioned passive radio frequency identification tag of the present invention is provided.

According to still another embodiment of the present invention, an optical fiber splicing device provided with the abovementioned optical radio frequency read/write head is provided, herein the splicing device includes a plurality of connection interfaces, each of the connection interfaces is configured as being connected with the abovementioned optical connection head in a pluggable way; a plurality of optical emitters of the radio frequency identification head are located, when a plurality of the optical fiber connection heads are plugged into the plurality of connection interfaces, at positions corresponding to the passive radio frequency identification tag on the corresponding optical fiber connection heads respectively.

According to still another embodiment of the present invention, it provides a read/write method in a radio frequency identification tag system, herein the RF tag system includes: the abovementioned optical radio frequency read/write head, as well as a plurality of the abovementioned passive radio frequency identification tags; the method includes: determining a radio frequency identification tag currently being read/written; sending a downlink optical signal to the passive radio frequency identification tag currently being read/written, and performing a read/write operation on the passive radio frequency identification tag currently being read/written; receiving an uplink radio frequency signal sent by the passive radio frequency identification tag currently being read/written in order to respond to the read/write operation.

Before sending the downlink optical signal to the passive radio frequency identification tag currently being read/written, the method further includes: controlling an optical emitter corresponding to the passive radio frequency identification tag currently being read/written in the optical radio frequency read/write head to illuminate, in order to supply power to the passive radio frequency identification tag current being read/written.

Said performing a read/write operation on the passive RF identification tag currently being read/written includes: sending an inquiry command to the passive radio frequency identification tag currently being read/written, herein the inquiry command is used to inquire a state of the passive radio frequency identification tag currently being read/written; and receiving a first state sent by the passive radio frequency identification tag currently being read/written.

The abovementioned method further includes: judging the first state; and assigning tag information to the passive radio frequency identification tag currently being read/written when the first state indicates that the passive radio frequency identification tag currently being read/written is blank.

The abovementioned method further includes: judging the first state; when the first state indicates that the passive radio frequency identification tag currently being read/written already has tag information, requesting the passive radio frequency identification tag currently being read/written to report tag information of the passive radio frequency identification tag currently being read/written.

The abovementioned method further includes: receiving the tag information reported by the passive radio frequency identification tag currently being read/written; judging whether the received tag information meets a preset condition; when the received tag information does not meet the preset condition, assigning new tag information to the passive radio frequency identification tag currently being read/written.

After performing the read/write operation on the passive radio frequency identification tag currently being read/written, the method further includes: turning off the optical emitter corresponding to the passive radio frequency identification tag currently being read/written in the optical RF read/write head; and performing a read/write operation on other passive radio frequency identification tags in the plurality of passive radio frequency identification tags.

According to still another embodiment of the present invention, it provides a read/write apparatus in a radio frequency identification tag system, herein the radio frequency tag system includes: the abovementioned optical radio frequency read/write head, and a plurality of the abovementioned passive radio frequency identification tags; the apparatus includes: a determining module, configured to determine a passive radio frequency identification tag currently being read/written; a sending module, configured to send a downlink optical signal to the passive radio frequency identification tag currently being read/written, and perform a read/write operation on the passive radio frequency identification tag currently being read/written; a receiving module, configured to receive an uplink radio frequency signal sent by the passive radio frequency identification tag currently being read/written in order to respond to the read/write operation.

Through the embodiments of the present invention, a read/write operation command is sent through an optical signal to a radio frequency identification signal under a radio frequency identification tag, in order to avoid sending a read/write operation command through a radio frequency signal and avoid the problem of interferences caused because a plurality of radio frequency identification tags receive the command.

### Brief Description of the Drawings

The accompanying drawings described herein are intended to provide a further understanding of the present invention and form a part hereof. The illustrative embodiments of the present invention and their description are used to explain the present invention and are not construed as limiting the present invention. In the accompanying drawings:
FIG. 1 is a schematic diagram of a contact tag technology in the related art;
FIG. 2 is a schematic diagram of an RFID technology in the related art;
FIG. 3 is a block diagram of the structure of an optical radio frequency read/write head in accordance with an embodiment of the present invention;
FIG. 4 is a block diagram of the structure of a passive radio frequency identification tag in accordance with an embodiment of the present invention;
FIG. 5 is a schematic diagram of a radio frequency tag identification system in accordance with an embodiment of the present invention;
FIG. 6 is a schematic diagram of an optical fiber connection head and an optical fiber splicing device in accordance with an embodiment of the present invention;
FIG. 7 is a flow chart of a read/write method in a radio frequency identification tag system in accordance with an embodiment of the present invention;
FIG. 8 is a block diagram of the structure of a read/write apparatus in the radio frequency identification tag system in accordance with an embodiment of the present invention; and
FIG. 9 is a schematic diagram of an alternative radio frequency identification system in accordance with an embodiment of the present invention.

### Specific Embodiments

Hereinafter, in conjunction with the accompanying drawings and embodiments, the present invention will be described in detail. It should be noted that, in the case of no conflict, embodiments and features in the embodiments of the present application may be combined with each other.

The following embodiments provide a contactless tag scheme. An optical emitter is provided at an optical RF read/write head and an optical signal is used to send a command to a radio frequency identification tag; the passive radio frequency identification tag is provided with a photovoltaic voltage detector to charge the radio frequency identification RFID tag and receive an optical signal. A radio frequency identification tag with a photovoltaic voltage detector is simply referred to as an optical RFID ORFID tag, also known as a passive radio frequency identification tag.

### First embodiment

FIG. 3 is a block diagram of the structure of an optical radio frequency read/write head in accordance with an embodiment of the present invention. As shown in FIG. 3, the optical radio frequency read/write head according to the embodiment of the present invention may include at least one optical emitter 310, chip 320, and radio frequency antenna 330. Herein, the radio frequency antenna 330 connected to the chip 320 is configured to receive an uplink radio frequency signal sent by a radio frequency identification tag. The chip 320 is configured to control at least one optical emitter 310 to send a downlink optical signal to the radio frequency identification tag and process an uplink radio frequency signal, in order to perform a read/write operation on the radio frequency identification tag. The optical emitter 310 connected to the chip 320 is configured to send a downlink optical signal.

In an alternative embodiment of the present invention, there are a plurality of the optical emitters 310. The chip 320 is further configured to, when performing a read/write operation on a designated radio frequency identification tag in a plurality of radio frequency identification tags, control an optical emitter 310 corresponding to the designated radio frequency identification tag in the plurality of optical emitters 310 to illuminate to turn on the designated radio frequency identification tag; and control the corresponding optical emitter to send a downlink optical signal. The plurality of optical emitters 310 are further configured to illuminate under the control of the chip 320. With the alternative embodiment, the radio frequency identification tag to be read/written is charged to be turned on, while the other radio frequency identification tags cannot receive and send radio frequency signals due to the absence of electric power, so that the interference can be better avoided.

In an alternative embodiment of the present invention, the optical radio frequency read/write head may include one RF antenna 330 only. With the alternative embodiment, there is no need to provide one radio frequency antenna for each radio frequency identification tag, thereby reducing the cost.

Of course, in the embodiments of the present invention, it is also possible to provide a plurality of radio frequency antennas 330. In order to avoid mutual interferences, alternatively the plurality of radio frequency antennas 330 are spaced apart from each other.

In an alternative embodiment of the present invention, the optical emitter 330 may be an LED, but is not limited thereto.

### Second embodiment

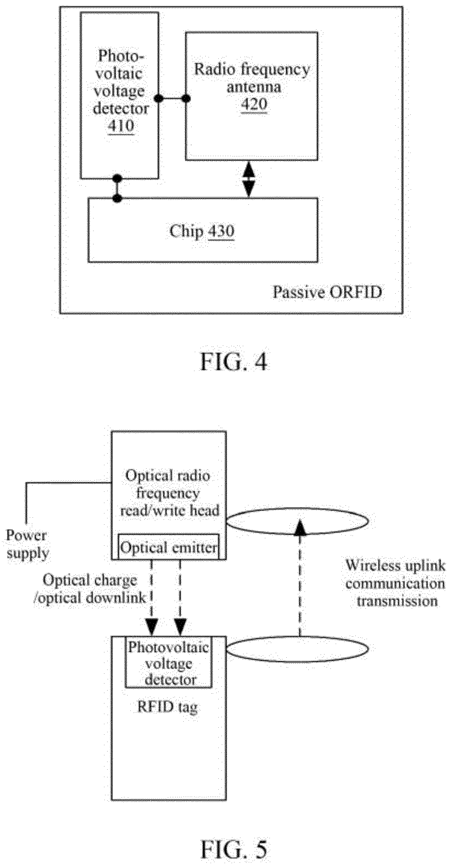

FIG. 4 is a block diagram of the structure of a passive radio frequency identification tag in accordance with an embodiment of the present invention. As shown in FIG. 4, the passive radio frequency identification tag in accordance with the embodiment of the present invention mainly includes Photovoltaic Voltage Detector PVD 410, radio frequency antenna 420, and chip 430. Herein, the photovoltaic voltage detector 410 connected to the chip 430 and the radio frequency antenna 420 is configured to convert optical energy emitted by the optical radio frequency read/write head to electrical energy to supply power to the chip 430 and the radio frequency antenna 420; and receive a downlink optical signal sent from the optical radio frequency read/write head, and convert the downlink optical signal into an electrical signal and send the electrical signal to the chip 430. The radio frequency antenna 420 is connected to the chip 430. The chip 430 is configured to save tag information, process an electrical signal, reply to a read/write operation of the optical radio frequency read/write head, and send an uplink radio frequency signal to the optical radio frequency read/write head.

### Third embodiment

FIG. 5 is a schematic diagram of a radio frequency tag identification system in accordance with an embodiment of the present invention. As shown in FIG. 5, the system includes a passive radio frequency identification tag 1 and an optical radio frequency read/write head 2.

Referring to FIG. 4, each passive radio frequency identification tag 1 includes a photovoltaic voltage detector, a radio frequency antenna and a chip. Herein, the photovoltaic voltage detector connected to the chip and the radio frequency antenna is configured to convert optical energy emitted by an optical radio frequency read/write head to electrical energy to supply power to the chip and the radio frequency antenna; and receive a downlink optical signal sent by the optical radio frequency read/write head, and convert the downlink optical signal to an electrical signal, and send the electrical signal to the chip. The chip is configured to store the tag information, process the electrical signal, reply to the read/write operation of the optical radio frequency read/write head 2, and send an uplink radio frequency signal to the optical radio frequency read/write head 2.

Referring to FIG. 3, the optical radio frequency read/write head 2 includes at least one optical emitter, a chip, and a radio frequency antenna. Herein, the radio frequency antenna connected to the chip is configured to send a downlink radio frequency signal to the passive radio frequency identification tag 1. The at least one optical emitter connected to the chip is configured to send a downlink optical signal to the passive radio frequency identification tag 1 under the control of the chip. The chip is configured to control the at least one optical emitter to send a downlink optical signal to the radio frequency identification tag 1, as well as process the uplink radio frequency signal, in order to perform a read/write operation on the radio frequency identification tag 1.

In an alternative embodiment of embodiments of the present invention, there are a plurality of optical emitters; the chip of the optical radio frequency read/write head 2 is further configured to, when performing a read/write operation on a designated radio frequency identification tag in the plurality of radio frequency identification tags, control an optical emitter corresponding to the designated radio frequency identification tag in the plurality of optical emitters to illuminate, in order to turn on the designated radio frequency identification tag; and control the corresponding optical emitter to send a downlink optical signal. The plurality of optical emitters are further configured to illuminate under the control of the chip of the optical radio frequency read/write head 2. With the alternative embodiment, the radio frequency identification tag to be read/written is charged to be turned on. Other radio frequency identification tags cannot receive and send radio frequency signals due to the absence of electric power, thereby better avoiding interferences.

In an implementation of the embodiment of the present invention, the optical radio frequency read/write head 2 may include only one radio frequency antenna.

In an implementation of the embodiment of the present invention, the optical emitter may be an LED or LD, but is not limited thereto.

The description of the passive radio frequency identification tag 1 and the optical radio frequency read/write head 2 can refer to the first embodiment and the second embodiment and will not be repeatedly described here.

### Fourth embodiment

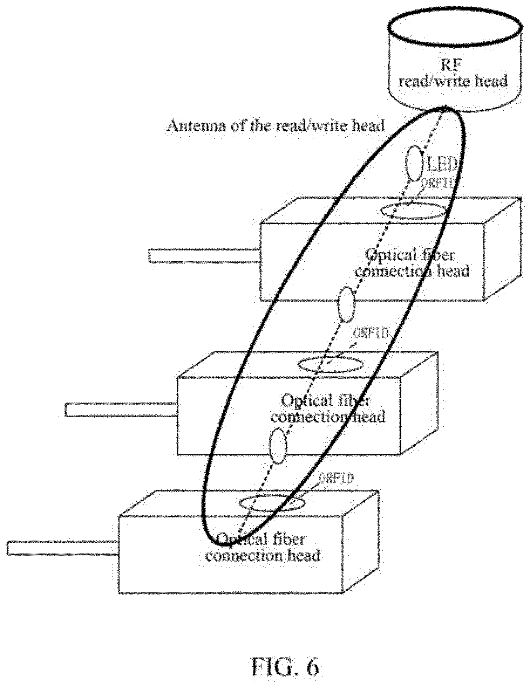

FIG. 6 is a schematic diagram of an optical fiber connection head and an optical fiber splicing device in accordance with an embodiment of the present invention. As shown in FIG. 6, each optical fiber connection head is provided with the passive radio frequency identification tag according to the second embodiment. The optical fiber splicing device is provided with the optical radio frequency read/write head according to the first embodiment. Herein, the splicing device includes a plurality of connection interfaces, and each connection interface is configured as being connected with the optical connection head in a pluggable way. The plurality of optical emitters of the radio frequency identification head are located, when a plurality of optical fiber connection heads are plugged into a plurality of connection interfaces, at positions corresponding to the passive radio frequency tags at the corresponding fiber optic connection heads respectively.

### Fifth embodiment

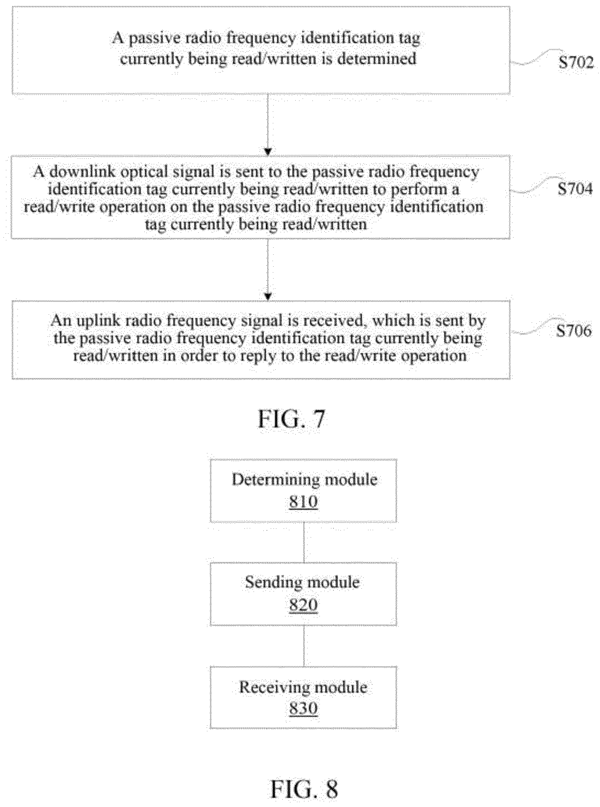

FIG. 7 is a flow chart of the read/write method in the radio frequency identification tag system according to an embodiment of the present invention. The radio frequency identification tag system includes the optical radio frequency read/write head of the first embodiment and a plurality of the passive radio frequency identification tags of the second embodiment. As shown in FIG. 7, the method includes steps S702 to S706.

In step S702, a passive radio frequency identification tag currently being read/written is determined.

In step S704, a downlink optical signal is sent to the passive radio frequency identification tag currently being read/written to perform a read/write operation on the passive radio frequency identification tag currently being read/written.

In step S706, an uplink radio frequency signal is received, which is sent by the passive radio frequency identification tag currently being read/written in order to respond to the read/write operation.

In an alternative embodiment of embodiments of the present invention, before a downlink optical signal is sent to the passive radio frequency identification tag currently being read/written, the optical emitter corresponding to the passive radio frequency identification tag currently being read/written in the optical radio frequency read/write head may be controlled to illuminate, in order to supply power to the radio frequency identification tag currently being read/written. With the alternative embodiment, the radio frequency identification tag to be read/written is charged to be turned on, while other radio frequency identification tags cannot receive and send radio frequency signals due to the absence of electric power, thereby better avoiding interferences.

In an implementation of the embodiment of the present invention, performing a read/write operation on the passive radio frequency identification tag currently being read/written may include an inquiry command is sent to the passive radio frequency identification tag currently being read/written, herein the inquiry command is configured to inquire the state of the passive radio frequency identification tag currently being read/written; a first state sent by the passive radio frequency identification tag currently being read/written is received. Alternatively, the abovementioned state may be tag information or the like. The tag information may include identity information and location information.

In an implementation of the embodiment of the present invention, the first state may also be judged; when the first state indicates that the passive radio frequency identification tag currently being read/written is blank, tag information is assigned to the passive radio frequency identification tag currently being read/written.

In an implementation of the embodiment of the present invention, the first state may also be judged; when the first state indicates that the passive radio frequency identification tag currently being read/written already has tag information, the passive radio frequency identification tag currently being read/written is requested to report tag information of the passive radio frequency identification tag currently being read/written.

In an implementation of the embodiment of the present invention, the tag information reported by the passive radio frequency identification tag currently being read/written may be received. Whether the received tag information meets a preset condition is judged. New tag information is assigned to the passive radio frequency identification tag currently being read/written when the received tag information does not meet the preset condition.

In an implementation of the embodiment of the present invention, after a read/write operation is performed on the passive radio frequency identification tag currently being read/written, the optical emitter corresponding to the passive radio frequency identification tag currently being read/written in the optical radio frequency read/write head may also be turned off. A read/write operation is performed on other passive radio frequency identification tags in the plurality of passive radio frequency identification tags.

FIG. 8 is a block diagram of the structure of a read/write apparatus in the radio frequency identification tag system in accordance with an embodiment of the present invention. The apparatus includes: determination module 810, configured to determine a passive radio frequency identification tag currently being read/written; sending module 820, configured to send a downlink optical signal to the passive radio frequency identification tag currently being read/written, in order to perform a read/write operation on the passive radio frequency identification tag currently being read/written; receiving module 830, configured to receive an uplink radio frequency signal sent by the passive radio frequency identification tag currently being read/written in order to respond to the read/write operation.

Alternative embodiments of the present invention will be described in the following.

### First Alternative Embodiment

In the alternative embodiment, an LED optical emitter is added to the original optical radio frequency read/write head, and a photovoltaic voltage detector is added to the original RFID tag, which is simply referred to as ORFID (Optical RFID). The LED of the optical radio frequency read/write head charges the tag or sends a downlink optical signal, as well as the tag sends an uplink signal to the read/write head via the radio frequency antenna of the ORFID, its downlink uses the optical wireless communication technology and its uplink uses the radio frequency communication technology. The ORFID tag can meet technical requirements of the tag being passive and the intelligent ODN having contactless read/write.

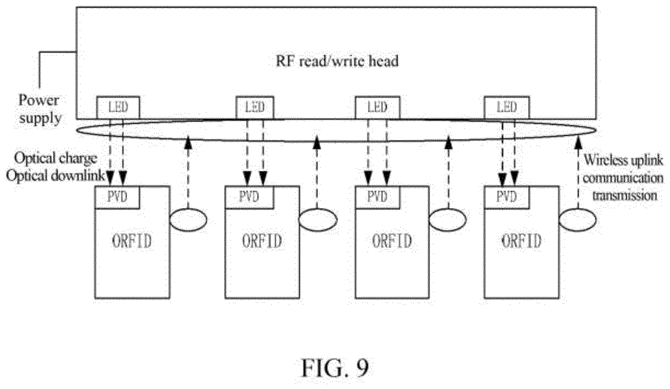

FIG. 5 is a schematic diagram of an alternative radio frequency identification system according to an embodiment of the present invention. As shown in FIG. 9, the system includes an optical radio frequency read/write head and a passive radio frequency identification tag.

Herein, the optical radio frequency read/write head adds a LED optical emitter on the basis of the original structure (RF coil and processing chip), and the RFID tag also adds a photovoltaic voltage detector on the basis of the original structure. First the read/write head turns on the optical emitter to charge the ORFID, and then sends a downlink optical signal through the LED. After the ORFID receives a command, it replies through its radio frequency antenna. After the read/write head assesses according to the reply to decide whether to continue or end the communication.

For dense read/write requirements, as shown in FIG. 9, it also may include one optical radio frequency read/write head, as well as a plurality of passive radio frequency identification tags.

The optical radio frequency read/write head includes a plurality of optical emitters, a radio frequency antenna and a chip. The basic structure diagram is shown in FIG. 3. The optical radio frequency read/write head is an active device and may illuminate through the optical emitter to charge the passive radio frequency identification tag or send a radio frequency signal to the passive radio frequency identification tag to transmit commands. Its radio frequency antenna may also receive a data signal transmitted back from the passive radio frequency identification tag and control the chip to process the data signal. In order to prevent several ORFIDs from sending information simultaneously to cause the confusion when the optical radio frequency read/write head receives information, the sending state of the optical emitter LED is controlled to control the sequence of the tag receiving and sending information, that is, if the information of a designated tag needs to be read/written, then the corresponding LED optical emitter above the corresponding tag will be turned on to charge the tag, and the optical emitter is turned off after the tag is read. Other tags cannot receive or send signals because their optical emitters are off and are in a state of no power, meanwhile all the ORFID tags share the RF antenna of one read/write head, while the control and processing part of the read/write head is located at a spare position nearby. One of the benefits of that is that there is no need to place a complete read/write head at each tag, thus reducing costs and also reducing the technical difficulty of reducing the size of the optical radio frequency read/write head. Currently it only needs to place a corresponding LED light in the space above the narrow tag; meanwhile the radio frequency antenna sharing also reduces costs and the difficulty of installation.

The passive radio frequency identification tag includes a photovoltaic voltage detector, a radio frequency antenna and a chip, its basic structure is shown in FIG. 4. First the photovoltaic voltage detector converts the received light into power to supply power to the radio frequency antenna and the chip, and then converts the received optical data signal into a corresponding electrical signal and sends the electrical signal to the chip. After the chip processes the data, the radio frequency antenna is started to transmit a reply signal to the optical radio frequency read/write head according to the requirements.

As the ORFID itself is passive, first the optical radio frequency read/write head illuminates to charge the radio frequency antenna and the chip, and then the optical radio frequency read/write head sends a command corresponding to the optical signal to the radio frequency antenna and the chip. After the photovoltaic voltage detector receives the command, the radio frequency antenna of the passive radio frequency identification tag sends a corresponding reply, and the optical radio frequency read/write head receives the reply and processes it. If the information is sufficient, the optical radio frequency read/write head informs the radio frequency identification tag that the information is received, and ends the process. If the information is not enough, the read/write head resends an inquiry command, and the radio frequency identification tag resends a reply according to the request until the optical radio frequency read/write head is satisfied. The optical radio frequency read/write head and the passive radio frequency identification tag do not touch, but the distance between them is very short and is generally limited to a very short distance. Applications of the intelligent ODN may be limited to 1 cm or less, the downlink data transmission is performed between them through the optical wireless communication point to point P2P technology, and the uplink data transmission is performed through the radio frequency wireless communication point to point P2P technology.

### Second Alternative Embodiment

The core of the alternative embodiment is a passive and contactless tag and a tag read/write system including the passive and contactless tag and a read/write head. The optical radio frequency read/write head is used to charge the passive radio frequency identification tag and transmit a downlink optical signal, then through the radio frequency wireless transmission technology, the passive radio frequency identification tag replies to the read/write head. In addition, the passive radio frequency identification tag has the features of editable and reusable.

The overall scheme of the alternative embodiment is shown in FIG. 5. Reading/writing the tag information is initiated by the chip in the optical radio frequency read/write head. The passive radio frequency identification tag mainly stores identity and location information which is provided by the optical radio frequency read/write head and may also be modified by the optical radio frequency read/write head. The working power supply of the passive radio frequency identification tag is obtained through the optical conversion by its photovoltaic voltage detector, and is charged via the optical radio frequency read/write head. Meanwhile the optical radio frequency read/write head sends relevant commands to the passive radio frequency identification tag through the LED, and the passive radio frequency identification tag replies to its information through the radio frequency mode. The optical radio frequency read/write head may control the on or off state of the optical emitter above the passive radio frequency identification tag to determine a corresponding tag to read the information.

For the requirement for the intelligent ODN with multiple dense read/write tags, its optical radio frequency read/write heads may be integrated, that is, they share a single chip and a radio frequency antenna, as shown in FIG. 9. One advantage of that is to reduce the size and the costs.

The optical radio frequency read/write head is shown in FIG. 3. The optical radio frequency read/write head is an active device that includes a plurality of optical emitters, a radio frequency antenna and a chip. Herein, the optical emitter is generally a LED, and its role is to charge the passive radio frequency identification tag and sends a downlink command optical signal to the passive radio frequency identification tag. The role of the radio frequency antenna is to receive a signal replied by the passive radio frequency identification tag. Finally the control processing chip may receive commands from an external network management, start the read/write of the passive radio frequency identification tag, provide identity and position information to the blank passive radio frequency identification tag, and read and compare the passive radio frequency identification tag that already has identity information, and also modify the appropriate information in the passive radio frequency identification tag. The control chip may start the information transmission and reading of a passive radio frequency identification tag through the on or off state of the LED. Finally the read/write head sends the relevant information to the network management or the control center to save.

The passive radio frequency identification tag is shown in FIG. 4. The passive radio frequency identification tag itself is passive, and includes a photovoltaic voltage detector, a radio frequency antenna and a chip. Herein, the photovoltaic voltage detector receives the light from the optical radio frequency read/write head and converts the light into electric power supply for the radio frequency antenna and the chip, and converts a downlink optical signal command from the read/write head into an electrical signal and sends the electrical signal to the chip. The chip processes the command, start the radio frequency antenna to reply, and the radio frequency antenna sends a reply signal according to the requirements of the control chip, and meanwhile the chip has the function of information storage.

### Third Alternative Embodiment

In the alternative embodiment, as shown in FIG. 6, first a passive radio frequency identification tag is placed at the optical connection head. A corresponding LED optical emitter is placed above the tag, and the control and processing part of the read/write head is placed in a spare space in the device, all the tags share the radio frequency antenna of one read/write head. When the optical connection head is plugged into the connection box, it indicates that the optical fiber is already in the connected state, and the tag is just below the optical emitter of the read/write head. When using the method to read/write tags, the specific working process is as follows.

First the read/write head receives a command from the network management or the control center to read/write tags, the control chip starts the read/write process. First the read/write head turns on the optical emitter LED of the corresponding passive radio frequency identification tag to charge it, and then start to perform the following test steps.
1, The LED sends an inquiry command, such as: the state of the tag, to the passive radio frequency identification tag.
2, The passive radio frequency identification tag replies with its current state, such as: blank or having identity information.
3. If the identity information is blank, the read/write head assigns identity information to the passive radio frequency identification tag. If the tag already has correct identity information, the optical radio frequency read/write head requires the passive radio frequency identification tag to report its identity information.
4, After the implementation completes, the passive radio frequency identification tag reports its current identity information.
5, The read/write head verifies the identity information. If the identity information does not meet the requirements, the read/write head re-assigns new identity information to the passive radio frequency identification tag, and the passive radio frequency identification tag repeats the step 4. Then the read/write head re-evaluates the information, and if the read/write head is not satisfied, steps 3, 4 and 5 are repeated.
   If the feedback information satisfies the requirements, the read/write head sends a command "end".
6, The passive radio frequency identification tag receives the command "end, thank you", and replies "end, confirm".
7, The read/write head receives the reply and turns off the LED.
8, The read/write head turns on the LED corresponding to another passive radio frequency identification tag, and steps 1-7 are repeated.

From the above description, it can be seen that the present invention achieves the following technical effects. The passive radio frequency identification tag has several advantages comparing to the pure radio frequency identification as follows.

First of all, the radio frequency antenna of the passive radio frequency identification tag does not need to take into account the problem of power supply, so the function of the antenna restores its instinct of sending and receiving RF, its design can be done relatively small, greatly reducing the size and volume of the tag, correspondingly the optical radio frequency read/write head does not need to consider its size, just a LED optical emitter needs to be placed above the tag. Meanwhile the radio frequency antenna and other parts can be shared, thus greatly reducing the cost and overcoming the problem that the size of a pure RFID cannot be small to limit its applications. The ORFID can solve the identification problem of dense optical connection heads.

Second, since the tag is charged by light, the read/write head only illuminates to charge the tag during the read/write, there is no problem of mistakenly supplying power to the adjacent tags. The adjacent tags cannot receive and send signals due to no enough power or light irradiation. The problem that the read/write head misjudges because adjacent tags compete to send signals in the pure RFID is also solved.

In addition, the LED not only bears the requirements of illuminating and charging, but also sending downlink commands of the read/write head to the ORFID. Those ORFID not illuminated by the LED will not receive the commands, therefore they will not send a signal reply, even if an ORFID is illuminated by other optical sources. If the ORFID is not illuminated by the LED of the designated read/write head, the ORFID will not receive the command and therefore will not send a reply signal. The double insurance function makes adjacent tags not send signals due to competition, and the read/write head will not misjudge.

Obviously, those skilled in the art should understand that various modules or steps of the present invention described above may be implemented by general-purpose computing devices that may be centralized on a single computing apparatus or distributed over a network consisting of a plurality of computing apparatuses, optionally, they may be implemented with program codes executable by the computing means so that they may be stored in the storage means and executed by the computing means, and in some cases, the steps shown or described herein may be performed in a order different from what shown herein, or them can be made separately into individual integrated circuit modules, or a plurality of modules or steps therein can be made into a single integrated circuit module. Thus, the present invention is not limited to any particular combination of hardware and software.

The above description is only alternative embodiments of the present invention and is not intended to limit the present invention, and for those skilled in the art, the present invention may have various changes and modifications. Any modifications, equivalent substitutions, improvements and the like made within the spirits and principles of the present invention are intended to be included in the protection scope of the present invention.

### Industrial Applicability

As described above, the passive radio frequency identification tag, optical radio frequency read/write head and radio frequency identification system provided in the embodiment of the present invention have the following beneficial effects. A read/write operation command is sent through an optical signal to a radio frequency identification signal under a radio frequency identification tag, in order to avoid sending a read/write operation command through a radio frequency signal and avoid the problem of interferences caused because a plurality of radio frequency identification tags receive the command.

## Claims

1. An optical radio frequency read/write head, comprising: at least one optical emitter, a chip, and a radio frequency antenna, wherein,
the radio frequency antenna connected to the chip is configured to receive an uplink radio frequency signal sent by a radio frequency identification tag;
the chip is configured to control the at least one optical emitter to send a downlink optical signal to the radio frequency identification tag and process the uplink radio frequency signal to perform a read/write operation on the radio frequency identification tag;
the at least one optical emitter connected to the chip is configured to send the downlink optical signal.

2. The optical radio frequency read/write head of claim 1, wherein, there are a plurality of the optical emitters;
the chip is further configured to, when performing a read/write operation on a designated radio frequency identification tag in a plurality of the radio frequency identification tags, control an optical emitter corresponding to the designated radio frequency identification tag in the plurality of optical emitters to illuminate to turn on the designated radio frequency identification tag; and control the corresponding optical emitter to send the downlink optical signal;
the plurality of optical emitters are further configured to illuminate under the control of the chip.

3. The optical radio frequency read/write head of claim 1 or 2, wherein, the optical radio frequency reader/writer head comprises one radio frequency antenna.

4. The optical radio frequency read-write head of claim 1, wherein, each of the optical emitters is a light emitting diode, LED, or a laser diode, LD.

5. A passive radio frequency identification tag comprising: a photovoltaic voltage detector, a radio frequency antenna, and a chip, wherein,
the photovoltaic voltage detector connected to the chip and the radio frequency antenna is configured to convert optical energy emitted by an optical radio frequency read/write head to electrical energy to supply power to the chip and the radio frequency antenna; and receive a downlink optical signal sent by the optical radio frequency read/write head, and convert the downlink optical signal to an electrical signal, and send the electrical signal to the chip;
the chip is configured to store tag information, process the electrical signal, respond to a read and write operation of the optical radio frequency read/write head, and send an uplink radio frequency signal to the optical radio frequency read/write head;
the radio frequency antenna connected to the chip is configured to send the uplink radio frequency signal.

6. A radio frequency tag identification system, comprising: a passive radio frequency identification tag and an optical radio frequency read/write head, wherein,
the passive radio frequency identification tag comprises a photovoltaic voltage detector, a first radio frequency antenna and a first chip, wherein the photovoltaic voltage detector connected with the first chip and the first radio frequency antenna is configured to convert optical energy emitted by the optical radio frequency read/write head to electrical energy to supply power to the first chip and the first radio frequency antenna, and receive a downlink optical signal sent by the optical radio frequency read/write head, convert the downlink optical signal into an electrical signal, and send the electrical signal to the first chip; the first chip is configured to store tag information, process the electrical signal, respond to a read/write operation of the optical radio frequency read/write head, and send an uplink radio frequency signal to the optical radio frequency read/write head; the first radio frequency antenna connected to the first chip is configured to send the uplink radio frequency signal;
the optical radio frequency read/write head comprises: at least one optical emitter, a second chip and a second radio frequency antenna, wherein the second radio frequency antenna connected with the second chip is configured to receive the uplink radio frequency signal; the second chip is configured to control the at least one optical emitter to send the downlink optical signal to the radio frequency identification tag, as well as process the uplink radio frequency signal to perform a read/write operation on the radio frequency identification tag; the at least one optical emitter connected to the second chip is configured to send the downlink optical signal under the control of the second chip.

7. The radio frequency identification system of claim 6, wherein, there are a plurality of the optical emitters;
the second chip is further configured to, when performing a read/write operation on a designated radio frequency identification tag in a plurality of the radio frequency identification tags, control an optical emitter corresponding to the designated radio frequency identification tag in the plurality of optical emitters to illuminate to turn on the designated radio frequency identification tag; as well as control the corresponding optical emitter to send the downlink optical signal;
the plurality of optical emitters are further configured to illuminate under the control of the chip.

8. The radio frequency identification system of claim 6 or 7, wherein, the optical radio frequency reader/writer head comprises one second radio frequency antenna.

9. The radio frequency identification system of claim 6, wherein, the optical emitter is a light emitting diode, LED, or a laser diode, LD.

10. An optical fiber connection head, wherein, the optical fiber connection head is provided with the passive radio frequency identification tag of claim 5.

11. An optical fiber splicing device provided with the optical radio frequency read/write head of any one of claims 1 to 4; wherein,
the splicing device comprises a plurality of connection interfaces, each of the connection interfaces is configured as being connected with the optical connection head of claim 10 in a pluggable way;
a plurality of optical emitters of the radio frequency identification head are located, when a plurality of the optical fiber connection heads are plugged into the plurality of connection interfaces, at positions corresponding to the passive radio frequency identification tags on the corresponding optical fiber connection heads respectively.

12. A read/write method in a radio frequency identification tag system, wherein the radio frequency tag system comprises: the optical radio frequency read/write head of any one of claims 1 to 4, as well as a plurality of the passive radio frequency identification tags of claim 5; the method comprises:
determining a radio frequency identification tag currently being read/written;
sending a downlink optical signal to the passive radio frequency identification tag currently being read/written, and performing a read/write operation on the passive radio frequency identification tag currently being read/written;
receiving an uplink radio frequency signal sent by the passive radio frequency identification tag currently being read/written to respond to the read/write operation.

13. The method of claim 12, wherein, before sending the downlink optical signal to the passive radio frequency identification tag currently being read/written, the method further comprises:
controlling an optical emitter corresponding to the passive radio frequency identification tag currently being read/written in the optical radio frequency read/write head to illuminate to supply power to the passive radio frequency identification tag current being read/written.

14. The method of claim 12, wherein, said performing a read/write operation on the passive RF identification tag currently being read/written comprises:
sending an inquiry command to the passive radio frequency identification tag currently being read/written, wherein the inquiry command is used to inquire a state of the passive radio frequency identification tag currently being read/written;
receiving a first state sent by the passive radio frequency identification tag currently being read/written.

15. The method of claim 14, wherein, the method further comprises:
judging the first state;
assigning tag information to the passive radio frequency identification tag currently being read/written when the first state indicates that the passive radio frequency identification tag currently being read/written is blank.

16. The method of claim 14 or 15, wherein, the method further comprises:
judging the first state;
when the first state indicates that the passive radio frequency identification tag currently being read/written already has tag information, requesting the passive radio frequency identification tag currently being read/written to report the tag information of the passive radio frequency identification tag currently being read/written.

17. The method of claim 16, wherein, the method further comprises:
receiving the tag information reported by the passive radio frequency identification tag currently being read/written;
judging whether the received tag information meets a preset condition;
when the received tag information does not meet the preset condition, assigning new tag information to the passive radio frequency identification tag currently being read/written.

18. The method of claim 13, wherein, after performing the read/write operation on the passive radio frequency identification tag currently being read/written, the method further comprises:
turning off the optical emitter corresponding to the passive radio frequency identification tag currently being read/written in the optical RF read/write head;
performing a read/write operation on other passive radio frequency identification tags in the plurality of passive radio frequency identification tags.

19. A read/write apparatus in a radio frequency identification tag system, wherein the radio frequency tag system comprises: the optical radio frequency read/write head of any one of claims 1 to 4, and a plurality of the passive radio frequency identification tags of claim 5; the apparatus comprises:
a determining module, configured to determine a passive radio frequency identification tag currently being read/written;
a sending module, configured to send a downlink optical signal to the passive radio frequency identification tag currently being read/written, and perform a read/write operation on the passive radio frequency identification tag currently being read/written;
a receiving module, configured to receive an uplink radio frequency signal sent by the passive radio frequency identification tag currently being read/written to respond to the read/write operation.
